# EUROPEAN PATENT SPECIFICATION

(11) **EP 2 852 771 B1**
(45) Date of publication and mention of the grant of the patent: **02.12.2015**
(21) Application number: 13727344.7
(22) Date of filing: 21.05.2013
(51) Int. Cl.: F16D 23/14

(54) **CLUTCH APPARATUS**
KUPPLUNGSVORRICHTUNG
APPAREIL D'EMBRAYAGE

(30) Priority: 23.05.2012 JP 2012117185
(43) Date of publication of application: 01.04.2015
(73) Proprietor: Toyota Jidosha Kabushiki Kaisha, Toyota-shi, Aichi 471-8571 (JP)
(72) Inventor: KONNO, Atsushi, Aichi-ken 471-8571 (JP)
(74) Representative: TBK
(86) International application number: PCT/IB2013/000985
(87) International publication number: WO 2013/175284

(56) References cited:
- EP-A1- 1 624 213
- EP-A2- 1 707 836
- US-A- 3 277 988

## Description

### BACKGROUND OF THE INVENTION

### 1. Field of the Invention

The invention generally relates to a clutch apparatus, and more particularly, to a clutch apparatus mounted in a vehicle.

### 2. Description of Related Art

Regarding clutch apparatuses according to related art, see the closest prior art, considered to be EP 1707836. Also, Japanese Utility Model Application Publication No. 5-79062 (JP 5-79062 U) describes a clutch release mechanism that is designed to both simplify the work of assembling a clutch and thus improve clutch assemblability by attaching a return spring without interfering with other parts of the clutch when attaching a release fork, and reduce manufacturing costs by omitting a special hook portion conventionally used exclusively for attaching a return spring.

The clutch release mechanism described in JP 5-79062 U includes a release fork that has a fork pivoting recessed portion, and a fork supporting portion that is provided on a transmission case and supports the fork pivoting recessed portion. First and second engaging holes are provided positioned on both sides (i.e., one on either side) of the fork pivoting recessed portion, in the release fork. A retaining pin that keeps the fork supporting portion engaged with the fork pivoting recessed portion is engaged in the first and second engaging holes. The retaining pin is provided oriented in a direction crossing an axial direction of the release fork.

Also, Japanese Patent Application Publication No. 2006-275271 (JP 2006-275271 A) describes a clutch release structure that is designed to provide, without special machining, a clutch release structure in which a boot is attached to a support.

In the clutch release structure described in JP 2006-275271 A, the support is attached to a transaxle case. A clutch release fork is pivotally supported by a tip end portion of the support that is formed in a spherical shape. A clip that is made of metal material having elastic force is provided on the clutch release fork, and this clip prevents the clutch release fork from slipping off of the support.

Also, Japanese Patent Application Publication No. 2010-255772 (JP 2010-255772 A) describes a clutch apparatus that is designed to keep the manufacturing cost from increasing by keeping the structure from becoming complex, and facilitate maintenance work for filling lubricant. Also, Japanese Utility Model Application Publication No. 61-49137 (JP 61-49137 U) describes a lubricating apparatus of a spherical friction sliding portion, that is designed to improve workability when attaching a cover that holds lubricant in a fulcrum portion of a clutch release fork.

As a clutch apparatus that transmits power generated by an engine to a transmission, and interrupts the transmission of power generated by the engine to the transmission, a structure that uses a clutch release fork that pivots in response to a clutch operation by a driver is known. With the various clutch apparatuses described in JP 5-79062 U, JP 2006-275271 A, JP 2010-255772 A, and JP 61-49137 U above, a part such as a retaining pin or a clip or the like is used to prevent the clutch release fork from slipping off of the release fork support that pivotally supports the clutch release fork.

However, in order to prevent foreign matter and water from getting into the sliding portion of the clutch release fork and the release fork support, a boot is sometimes provided as a seal member around the release fork support. In this case, depending on the attachment structure of the retaining pin or the clip, the pivoting movement of the clutch release fork may be transmitted to these parts, which may create a gap between the boot and the release fork support. In this case, sufficient sealability with respect to the fulcrum that pivotally supports the clutch release fork may be difficult to ensure.

### SUMMARY OF THE INVENTION

The invention thus provides a clutch apparatus that ensures sufficient sealability with respect to a fulcrum that pivotally supports a clutch release fork.

One aspect of the invention relates to a clutch apparatus. This clutch apparatus includes a release fork support, a clutch release fork, a seal member, and a sandwiching member. The release fork support has a spherical sliding portion. The clutch release fork has a recessed portion, and a first side portion and a second side portion. The recessed portion is in sliding contact with the sliding portion. The first side portion and the second side portion are provided one on each side of the recessed portion such that the recessed portion is sandwiched by the first side portion and the second side portion, and a long hole is formed in both the first side portion and the second side portion. The clutch release fork pivots in a clutch disconnecting direction or a clutch connecting direction, centered around a predetermined pivot central axis, with the sliding portion as a fulcrum. The long hole has a shape curved centered on the pivot central axis. The seal member extends from the release fork support toward the clutch release fork. The seal member forms a space to be filled with lubricant, around the release fork support. The sandwiching member is held to the clutch release fork by being inserted into the long hole, and sandwiches the release fork support via the seal member. The long hole is provided so as to enable the sandwiching member to move inside the long hole as the clutch release fork pivots.

According to the clutch apparatus structured in this way, the release fork support is sandwiched via the seal member by the sandwiching member. As a result, the seal member is fixed to the release fork support, while the clutch release fork is prevented from slipping off of the release fork support. At this time, the sandwiching member moves in the long hole having a curved shape centered around the pivot central axis as the clutch release fork pivots, so the pivoting movement of the clutch release fork is able to be inhibited from being transmitted to the sandwiching member. As a result, the assembly state of the seal member with respect to the release fork support is able to be prevented from changing, so sufficient sealability is able to be ensured with respect to the fulcrum that pivotally supports the clutch release fork.

In the clutch apparatus described above, the sandwiching member may move between a first position and a second position in the long hole as the clutch release fork pivots. The long hole may have a first end portion and a second end portion, and extend curving between the first end portion and the second end portion. A center position between the first position and the second position may be aligned with a center position between the first end portion and the second end portion.

According to the clutch apparatus structured in this way, the sandwiching member is able to move in the long hole when the clutch release fork pivots.

In the clutch apparatus described above, a groove that extends along an outer periphery of the release fork support, and into which the sandwiching portion fits, may be formed in the seal member.

According to the clutch apparatus structured in this way, having the sandwiching member fit into the groove formed in the seal member enables the seal member to be fixed to the release fork support, while preventing the clutch release fork from slipping off of the release fork support.

In the clutch apparatus described above, the groove may be provided not communicated with the space to be filled with lubricant.

According to the clutch apparatus structured in this way, sealability by the seal member will not be lost due to the forming of the groove. Therefore, sufficient sealability is able to be ensured with respect to the fulcrum that pivotally supports the clutch release fork.

In the clutch apparatus described above, the seal member may have a fitting portion that fits together with the release fork support. A lip portion that contacts the release fork support may be formed on the fitting portion. The sandwiching member may be provided on the fitting portion so as to sandwich the release fork support on an outer periphery of the lip portion.

According to the clutch apparatus structured in this way, the tension force of the fitting portion against the release fork support is increased by the sandwiching portion, on the outer periphery of the lip portion. Therefore, the sealability between the seal member and the release fork support is able to be improved.

In the clutch apparatus described above, the long hole may be a first long hole and a second long hole. The first side portion may be provided on one of two sides sandwiching the recessed portion, and the first long hole may be formed in the first side portion. The second side portion may be provided on the other of the two sides sandwiching the recessed portion, and the second long hole may be formed in the second side portion.

As described above, according to the invention, it is possible to provide a clutch apparatus that ensures sufficient sealability with respect to a fulcrum that pivotally supports a clutch release fork.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view of a clutch apparatus according to one example embodiment of the invention;
FIG. 2 is a front view of the clutch apparatus taken along line II - II in FIG. 1;
FIG. 3 is a sectional view of the clutch apparatus taken along line III - III in FIG. 2;
FIG. 4 is an enlarged sectional view of the area encircled by the alternate long and two short dashes line IV in FIG. 3;
FIG. 5 is a plan view of a fork slip-off preventing clip provided in the clutch apparatus in FIG. 1;
FIG. 6 is a side view of the fork slip-off preventing clip provided in the clutch apparatus in FIG. 1;
FIG. 7 is a side view of the clutch apparatus as viewed from the direction indicated by arrow VII in FIG. 2;
FIG. 8 is a side view of a clutch release fork positioned at one pivoting end in the clutch apparatus shown in FIG. 7;
FIG. 9 is a side view of the clutch release fork positioned at the other pivoting end in the clutch apparatus shown in FIG. 7;
FIG. 10 is a sectional view of the clutch release fork positioned at one pivoting end in the clutch apparatus shown in FIG. 3; and
FIG. 11 is a sectional view of an assembly process of the clutch apparatus shown in FIG. 3.

### DETAILED DESCRIPTION OF EMBODIMENTS

Example embodiments of the invention will now be described with reference to the accompanying drawings. In the drawings referred to below, like reference characters will be used to denote like or corresponding members.

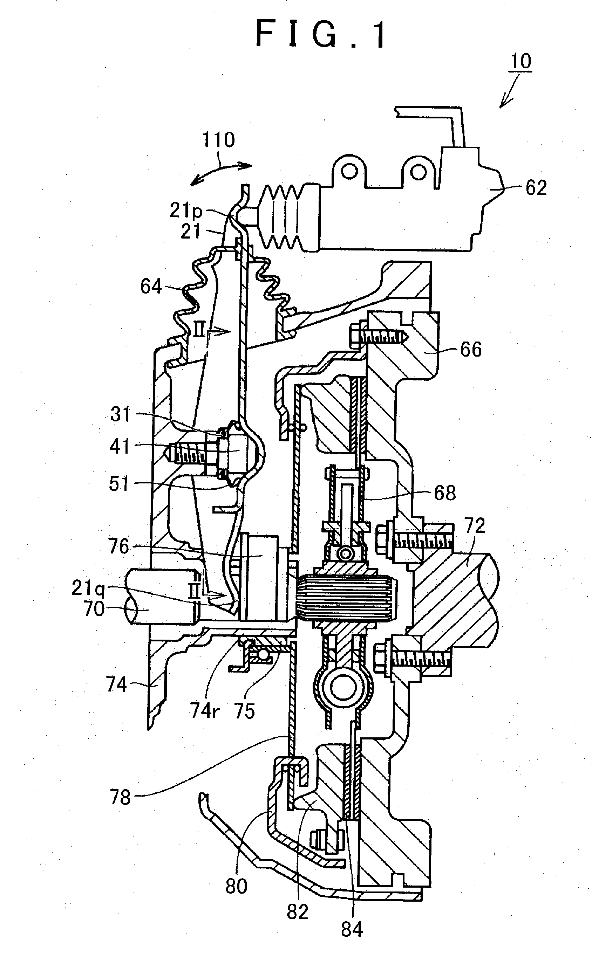

FIG. 1 is a sectional view of a clutch apparatus according to one example embodiment of the invention. Referring to FIG. 1, the clutch apparatus 10 of this example embodiment is mounted in a vehicle. The clutch apparatus 10 is mounted in a manual transmission vehicle. The clutch apparatus 10 is an apparatus that is arranged between an engine that serves as a power source, and a transmission, and transmits power generated by the engine to the transmission, and interrupts the transmission of power generated by the engine to the transmission.

First, the basic structure of the clutch apparatus 10 will be described. The clutch apparatus 10 includes, as component parts of a clutch main body that performs the power connecting / disconnecting operation, a clutch disc 68, a diaphragm spring 78, a pressure plate 82, a clutch cover 80, and a release bearing 76.

The clutch cover 80, the pressure plate 82, and the diaphragm spring 78 are fixed to a flywheel 66, and rotate together with a crankshaft 72 of the engine. The clutch cover 80 is provided covering the clutch disc 68, the diaphragm spring 78, and the pressure plate 82. An opening is formed in the clutch cover 80 to expose a center portion of the diaphragm spring 78.

The clutch disc 68 has a circular disc shape. The clutch disc 68 is spline-engaged at a center portion to the clutch shaft 70 on the transmission side. The clutch disc 68 has a clutch facing 84 that is sandwiched between the pressure plate 82 and the flywheel 66.

The clutch facing 84 is made of material that has a suitable coefficient of friction, is highly wear-resistant and heat resistant, and in which the coefficient of friction does not change according to a change in temperature when connected. More specifically, the clutch facing 84 may be a resin mold type clutch facing in which a resin treatment is applied to a base of glass fiber, a woven mold type clutch facing, or a metal mold semi-metal or ceramic type clutch facing for improving the thermal conductivity and strength.

The clutch disc 68 transmits the rotation of the flywheel 66 to the transmission via the clutch shaft 70 by friction force between the clutch facing 84 and the flywheel 66.

The diaphragm spring 78 is provided on the opposite side of the pressure plate 82 than the clutch facing 84. A peripheral edge portion of the diaphragm spring 78 is connected to the pressure plate 82, and a center portion of the diaphragm spring 78 is connected to the release bearing 76. The diaphragm spring 78 is provided as a clutch spring for pushing the clutch facing 84 toward the flywheel 66 via the pressure plate 82.

In this example embodiment, a structure in which the diaphragm spring 78 is used as a clutch spring is described, but the invention is not limited to this. That is, a coil spring may be used instead of the diaphragm spring 78.

The pressure plate 82 has a circular disc shape. The pressure plate 82 is provided between the clutch facing 84 and the diaphragm spring 78.

When the clutch is connected, the pressure plate 82 pushes the clutch facing 84 toward the flywheel 66 with even force by the elastic force of the diaphragm spring 78. As a result, friction force is generated between the clutch facing 84 and the flywheel 66, such that the rotation of the flywheel 66 is transmitted to the clutch disc 68.

When the clutch is disconnected, the peripheral edge portion of the diaphragm spring 78 is displaced in a direction away from the flywheel 66 by the release bearing 76 pushing on the center portion of the diaphragm spring 78. At this time, the pressure plate 82 is pulled, together with the diaphragm spring 78, in a direction away from the flywheel 66. As a result, the friction force between the clutch facing 84 and the flywheel 66 is eliminated, so the rotation of the flywheel 66 is not transmitted to the clutch disc 68.

The clutch apparatus 10 has, as component parts of an operating mechanism for operating the clutch main body from a driver's seat, a release cylinder 62, a clutch release fork 21, a fork slip-off preventing clip 31, a release fork support 41, and a fork support boot 51.

The release fork support 41 is attached to a clutch housing 74 that serves as a case body. The clutch release fork 21 is supported so as to be able to pivot in the clutch connecting / disconnecting direction (i.e., the direction indicated by arrow 110) by the release fork support 41.

The clutch release fork 21 has one end 21p and another end 21q on opposite sides of a fulcrum supported by the release fork support 41. The clutch release fork 21 extends outside the clutch housing 74 from the fulcrum supported by the release fork support 41, and extends toward the one end 21p. The clutch release fork 21 is covered by a fork boot 64 at the position where it extends outside the clutch housing 74. The release cylinder 62 is connected to the one end 21p of the clutch release fork 21, and the release bearing 76 is connected to the other end 21q of the clutch release fork 21. The clutch release fork 21 is provided as a member for moving the release bearing 76 in an axial direction of the clutch shaft 70.

The fork slip-off preventing clip 31 is provided as a sandwiching member for preventing the clutch release fork 21 from slipping off of the release fork support 41. The fork support boot 51 is provided as a seal member for preventing foreign matter from getting into the fulcrum of the release fork support 41, and enclosing lubricant around the release fork support 41.

A sleeve 75 is fit over on an outer periphery of a retainer portion 74r that extends from the clutch housing 74. The clutch shaft 70 is inserted into the retainer portion 74r. The release bearing 76 includes an outer race that is supported by the sleeve 75, and an inner race that contacts the diaphragm spring 78. The release bearing 76 is provided so as to be able to move in the axial direction of the clutch shaft 70 with respect to the retainer portion 74r.

When a driver depresses a clutch pedal, the release cylinder 62 operates. The release cylinder 62 pushes on the one end 21p of the release fork support 41, and as a result, the clutch release fork 21 pivots with the release fork support 41 as the fulcrum. As the clutch release fork 21 pivots, the other end 21 q of the clutch release fork 21 pushes on the release bearing 76, and as a result, the release bearing 76 slides toward the flywheel 66. Consequently, the release bearing 76 pushes on the center portion of the diaphragm spring 78, such that the clutch becomes disconnected.

In this example embodiment, the structure of a hydraulic clutch that drives the clutch release fork 21 by the release cylinder 62 is described, but the invention is not limited to this. That is, the invention may also be applied to a so-called cable clutch in which the clutch release fork 21 is pulled by a cable.

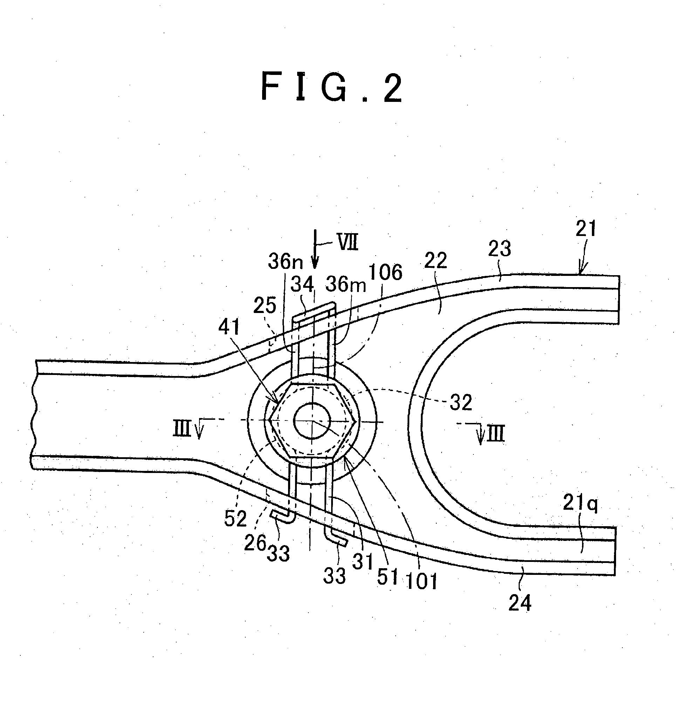

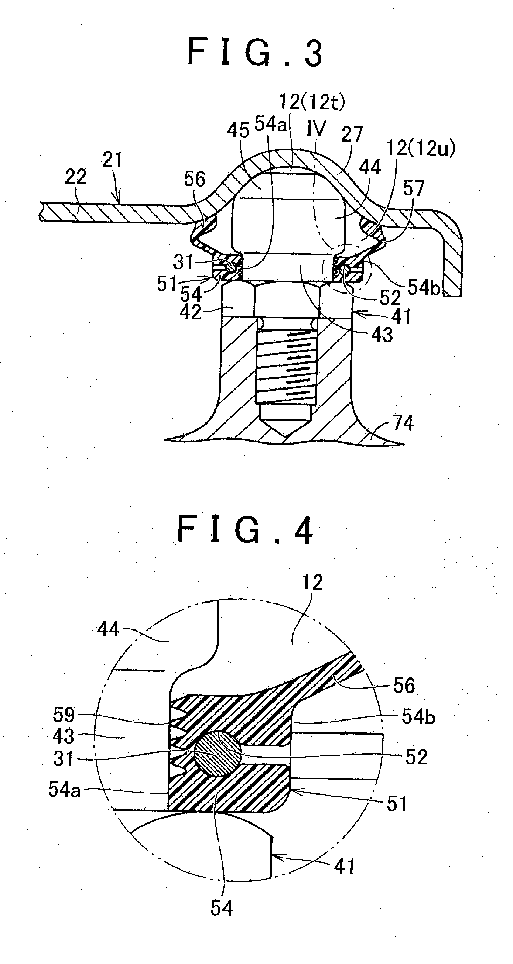

Continuing on, the seal structure of the clutch release fork 21 in FIG. 1 will be described in detail. FIG. 2 is a front view of the clutch apparatus taken along line II - II in FIG. 1. FIG. 3 is a sectional view of the clutch apparatus taken along line III - III in FIG. 2.

Referring to FIGS. 2 and 3, the clutch release fork 21 is formed by press-forming a metal plate such as a rolled steel plate.

The clutch release fork 21 has, as component parts, a flat plate portion 22, a support receiving portion 27, a folded-back portion 23, and a folded-back portion 24. The flat plate portion 22 extends from the one end 21p (see FIG. 1) toward the other end 21q, and has a forked shape at a tip end where the other end 21q is arranged.

The support receiving portion 27 is formed on the flat plate portion 22. The support receiving portion 27 is provided between the one end 21p and the other end 21q. The support receiving portion 27 is formed in a concave shape that is recessed toward the flywheel 66 in FIG. 1. The support receiving portion 27 is formed in a curved shape. The clutch release fork 21 is supported in a state in which the support receiving portion 27 is made to contact the release fork support 41.

The folded-back portion 23 and the folded-back portion 24 are each formed by an outer edge of the flat plate portion 22 that is folded back. The folded-back portion 23 and the folded-back portion 24 are provided on both sides (i.e., one on each side) of the support receiving portion 27 so as to sandwich the support receiving portion 27. The folded-back portion 23 and the folded-back portion 24 are arranged facing each other in a direction orthogonal to the direction in which the one end 21p and the other end 21p of the clutch release fork 21 are connected together.

A long hole 25 for inserting a clip is formed in the folded-back portion 23, and a long hole 26 for inserting a clip is formed in the folded-back portion 24. The long hole 25 and the long hole 26 are formed by through-holes that extend through the folded-back portion 23 and the folded-back portion 24, respectively. The release fork support 41 is positioned between the long hole 25 and the long hole 26. The long hole 25 and the long hole 26 are provided opposite each other sandwiching the release fork support 41.

The release fork support 41 is made of metal material such as carbon steel. The release fork support 41 extends in a column shape from the clutch housing 74 toward the support receiving portion 27 of the clutch release fork 21.

The release fork support 41 has, as component parts, a nut portion 42, a constricted portion 43, a middle portion 44, and a sliding portion 45. The nut portion 42, the constricted portion 43, the middle portion 44, and the sliding portion 45 are provided lined up in the order given, in the direction from the clutch housing 74 toward the support receiving portion 27 of the clutch release fork 21. The constricted portion 43 and the sliding portion 45 are provided apart from each other sandwiching the middle portion 44.

The nut portion 42 has a hexagonal outer peripheral surface, and is able to be gripped using a tool when fastening the release fork support 41 to the clutch housing 74. The constricted portion 43 has a shape that is more constricted (a shape with a diameter that is reduced) more than the middle portion 44 and the nut portion 42 that are arranged on both sides of the constricted portion 43. The constricted portion 43 extends in a circular column shape between the middle portion 44 and the nut portion 42. The constricted portion 43 has a constant diameter between the middle portion 44 and the nut portion 42. The constricted portion 43 is provided in a position overlapping with the fork slip-off preventing clip 31.

The middle portion 44 has a shape that increases in diameter from the constricted portion 43, and then extends toward the sliding portion 45 while maintaining a substantially constant diameter. In the cross-section shown in FIG. 3, the middle portion 44 is provided between the fork slip-off preventing clip 31, and the support receiving portion 27 of the clutch release fork 21.

The shape of the middle portion 44 is not limited to this however. For example, the middle portion 44 may alternatively have a shape that is bent or inclined in the axial direction of the release fork support 41.

The sliding portion 45 is provided on a tip end of the release fork support 41 that extends from the clutch housing 74 toward the support receiving portion 27 of the clutch release fork 21. The sliding portion 45 has a spherical shape at the tip end of the release fork support 41. The sliding portion 45 is provided contacting the clutch release fork 21. As the clutch release fork 21 pivots, the support receiving portion 27 slides against the sliding portion 45.

The fork support boot 51 is made of rubber material or synthetic resin or the like. The fork support boot 51 is made of elastic material.

The fork support boot 51 is provided around the release fork support 41. The fork support boot 51 is provided on the outer periphery of the release fork support 41. The fork support boot 51 is provided on the outer periphery of the constricted portion 43 and the middle portion 44. The fork support boot 51 extends from the release fork support 41 toward the clutch release fork 21. The fork support boot 51 is fitted to (i.e., engaged with) the constricted portion 43.

The fork support boot 51 is provided so as to form a space 12 to be filled with lubricant around the release fork support 41. The lubricant that is filled into the space 12 lubricates the sliding portion of the sliding portion 45 and the support receiving portion 27. The fork support boot 51 functions as a seal member for preventing lubricant that has been filled into the space 12 from leaking out, as well as preventing foreign matter from getting into the space 12 from the outside. In this example embodiment, semifluid grease is filled into the space 12. As the space 12, a main space 12t that accumulates lubricant is formed between the sliding portion 45 and the support receiving portion 27, and a subspace 12u that secondarily stores lubricant is formed between the middle portion 44 and the fork support boot 51.

FIG 4 is an enlarged sectional view of the area encircled by the alternate long and two short dashes line IV in FIG. 3. Referring to FIGS. 2 to 4, the fork support boot 51 includes a fitting portion 54, a lip portion 56, and a lip portion 59.

The fitting portion 54 fits onto the constricted portion 43. The fitting portion 54 fits onto the constricted portion 43 with constant tension force. The fitting portion 54 has a ring shape that wraps around the outer periphery of the constricted portion 43. The fitting portion 54 has an inner peripheral surface 54a and an outer peripheral surface 54b. The inner peripheral surface 54a contacts the constricted portion 43. The outer peripheral surface 54b is arranged on the back side of the inner peripheral surface 54a.

A clip through-groove 52 as a groove is formed in the fitting portion 54. The clip through-groove 52 extends in the circumferential direction of the ring shape of the fitting portion 54. The clip through-groove 52 extends in the circumferential direction along the outer periphery of the constricted portion 43. The clip through-groove 52 is formed not communicated with the space 12 into which lubricant is filled. The clip through-groove 52 is formed open to the outer peripheral surface 54b.

The lip portion 56 is formed to provide a seal between the fork support boot 51 and the clutch release fork 21. The lip portion 56 is provided on the outer periphery of the release fork support 41. The lip portion 56 extends from the fitting portion 54 toward the clutch release fork 21, and contacts the clutch release fork 21. A bellows portion 57 is formed on the lip portion 56. The subspace 12u is formed in a position surrounded by the lip portion 56, the clutch release fork 21, and the release fork support 41.

The bellows portion 57 is formed by the lip portion 56 being folded back between the fitting portion 54 and the position where the lip portion 56 contacts the clutch release fork 21. A tip end of the lip portion 56 is urged against the clutch release fork 21 by elastic force generated by the bellows portion 57.

In FIG. 3, the bellows portion 57 having one fold is formed on the lip portion 56, but the invention is not limited to this. That is, the bellows portion 57 may also be formed having a plurality of folds, by the lip portion 56 being folded back a plurality of times.

The lip portion 59 is formed on the front surface of the fitting portion 54 that contacts the release fork support 41, i.e., on the inner peripheral surface 54a of the fitting portion 54. The lip portion 59 is formed on the inner peripheral side of the clip through-groove 52. The lip portion 59 is provided to provide a seal between the fork support boot 51 and the release fork support 41.

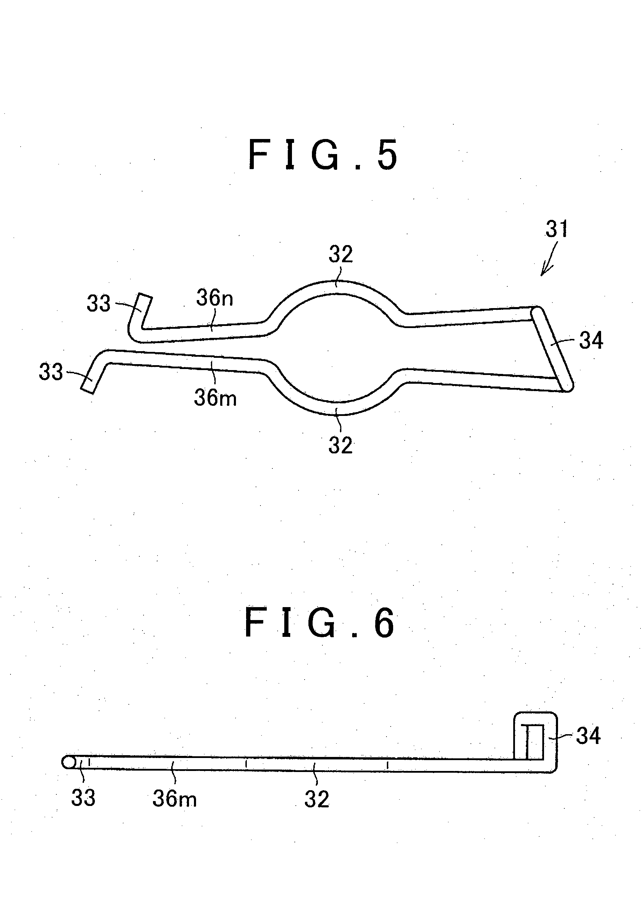

FIG. 5 is a plan view of a fork slip-off preventing clip provided in the clutch apparatus in FIG. 1. FIG. 6 is a side view of the fork slip-off preventing clip provided in the clutch apparatus in FIG 1.

Referring to FIGS. 5 and 6, the fork slip-off preventing clip 31 is made of metal material having elastic force. The fork slip-off preventing clip 31 has a general V-shape in which a pair of arm portions, i.e., an arm portion 36m and an arm portion 36n, intersect. When the fork slip-off preventing clip 31 is deformed such that the angle where the arm portion 36m and the arm portion 36n intersect becomes larger, elastic force is generated in the direction that brings the arm portion 36m and the arm portion 36n toward one another.

A retaining portion 33 and a retaining portion 34, and a seal fixing portion 32 are formed on the fork slip-off preventing clip 31.

The retaining portion 33 is formed on the tip end of both the arm portion 36m and the arm portion 36n. The retaining portion 33 is formed on one of the arm portion 36m and the arm portion 36n so as to protrude in a direction away from the other of the arm portion 36m and the arm portion 36n. The retaining portion 34 is formed in a position where the arm portion 36m and the arm portion 36n intersect, i.e., at the bottom of the V-shape of the fork slip-off preventing clip 31. The retaining portion 34 is formed bent back in a direction orthogonal to the direction in which the arm portion 36m and the arm portion 36n extend.

The seal fixing portion 32 is formed on both the arm portion 36m and the arm portion 36n, in a position between the retaining portion 34 and the retaining portion 33. The seal fixing portion 32 is formed on one of the arm portion 36m and the arm portion 36n so as to protrude in a direction away from the other of the arm portion 36m and the arm portion 36n. The seal fixing portion 32 is formed curved in an arc-shape. The seal fixing portion 32 has a curved shape corresponding to the clip through-groove 52 formed in the fork support boot 51.

Referring to FIGS. 2 and 3, the fork slip-off preventing clip 31 is assembled extending from the folded-back portion 23 toward the folded-back portion 24, on the flat plate portion 22, while deformed such that the angle at which the arm portion 36m and the arm portion 36n intersect becomes larger. The fork slip-off preventing clip 31 is held to the clutch release fork 21 by the retaining portion 34 being inserted into the long hole 25 formed in the folded-back portion 23, and the retaining portion 33 being inserted into the long hole 26 formed in the folded-back portion 24.

At this time, the fork slip-off preventing clip 31 is provided such that the release fork support 41 is sandwiched between the arm portion 36m and the arm portion 36n. The seal fixing portion 32 is arranged in the clip through-groove 52. With this kind of structure, the fork slip-off preventing clip 31 exerts force on the fork support boot 51, in a direction that pushes the fork support boot 51 toward the release fork support 41. The fork slip-off preventing clip 31 sandwiches the release fork support 41 via the fork support boot 51.

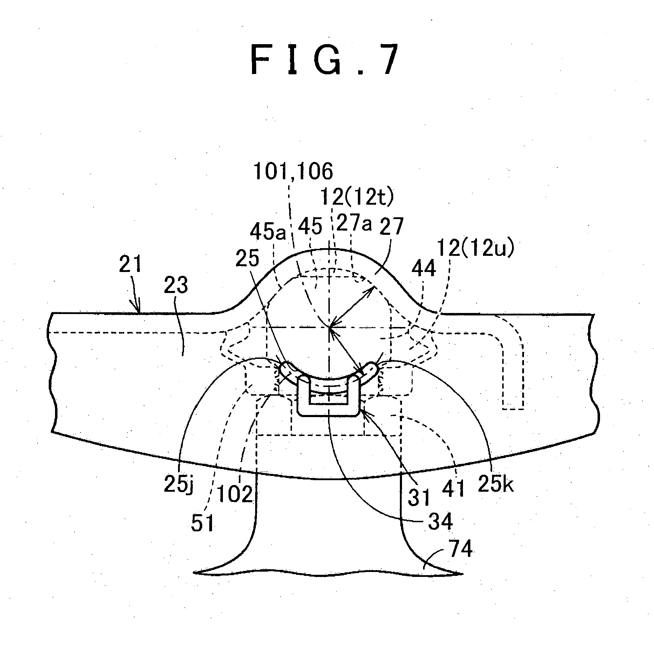

FIG. 7 is a side view of the clutch apparatus as viewed from the direction indicated by arrow VII in FIG. 2. Referring to FIGS. 2 and 7, the support receiving portion 27 has a spherical surface 27a. The sliding portion 45 has a spherical surface 45a. The spherical surface 27a and the spherical surface 45a are in sliding contact with each other. The spherical surface 27a and the spherical surface 45a both have a radius r centered on a center point 101.

The clutch release fork 21 that is supported by the release fork support 41 pivots about a pivot central axis 106 that passes through the center point 101. The pivot central axis 106 is orthogonal to the direction in which the one end 21 p and the other end 21 q of the clutch release fork 21 are connected together. Assuming that the clutch release fork 21 pivots such that an arbitrary position in the clutch release fork 21 moves within a predetermined plane, the pivot central axis 106 is orthogonal to this arbitrary plane.

The long hole 25 has a curved shape centered on the pivot central axis 106. The long hole 25 extends in an arc-shape centered on the pivot central axis 106. FIG. 7 shows a virtual arc 102 having a radius R centered on the pivot central axis 106. The long hole 25 extends in an arc-shape overlapping with the arc 102. In this example embodiment, the radius R of the arc 102 that overlaps with the long hole 25 is equal to the radius r of the spherical surface 45a and the spherical surface 27a.

The radius R of the arc 102 that overlaps with the long hole 25 may be larger than the radius r of the spherical surface 45a and the spherical surface 27a, or the radius R of the arc 102 that overlaps with the long hole 25 may be smaller than the radius r of the spherical surface 45a and the spherical surface 27a.

The long hole 25 has an end portion 25j and an end portion 25k. The long hole 25 extends in a curve between the end portion 25j and the end portion 25k. The fork slip-off preventing clip 31 extends overall in the axial direction of the pivot central axis 106, between the folded-back portion 23 and the folded-back portion 24.

FIG. 7 shows the shape of the long hole 25 formed in the folded-back portion 23, but the long hole 26 formed in the folded-back portion 24 also has the same shape as the long hole 25. The long hole 26 and the long hole 25 have symmetrical shapes that sandwich the fork support boot 51.

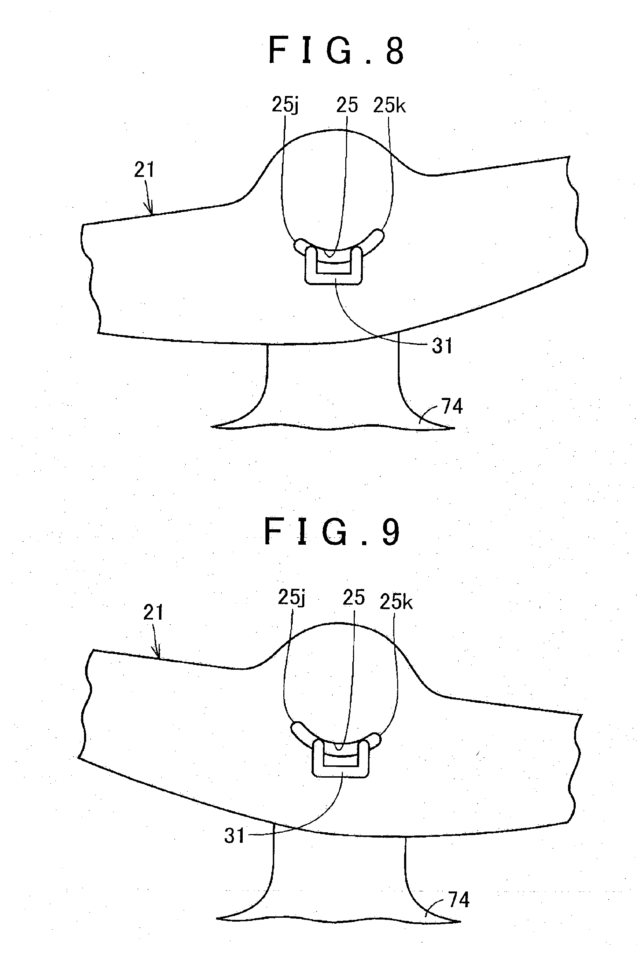

FIG. 8 is a side view of the clutch release fork positioned at one pivoting end (i.e., in a position at one end of the range within which the clutch release fork is able to pivot), in the clutch apparatus shown in FIG. 7. FIG. 9 is a side view of the clutch release fork positioned at the other pivoting end (i.e., in a position at the other end of the range within which the clutch release fork is able to pivot), in the clutch apparatus shown in FIG. 7.

Referring to FIGS. 8 and 9, when the clutch release fork 21 pivots, the inclination of the clutch release fork 21 with respect to the release fork support 41 changes. In this example embodiment, the long hole 25 and the long hole 26 have curved shapes centered on the pivot central axis 106 of the clutch release fork 21, so as the clutch release fork 21 pivots, the fork slip-off preventing clip 31 moves inside the long hole 25 and the long hole 26.

The long hole 25 is formed such that a center position between one moving end of the fork slip-off preventing clip 31 shown in FIG. 8 (i.e., a position at one end of the range within which the fork slip-off preventing clip 31 is able to move) and the other moving end of the fork slip-off preventing clip 31 shown in FIG. 9 (i.e., a position at the other end of the range within which the fork slip-off preventing clip 31 is able to move) is aligned with a center position between the end portion 25j and the end portion 25k of the long hole 25. The long hole 26 is formed similar to the long hole 25.

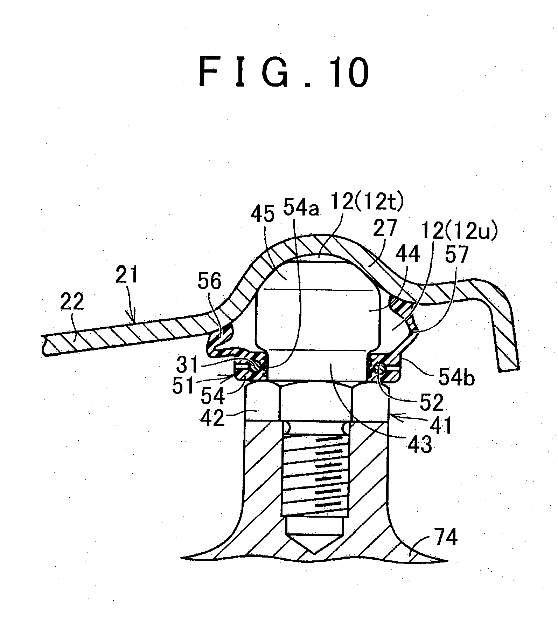

FIG. 10 is a sectional view of the clutch release fork positioned at one pivoting end, in the clutch apparatus shown in FIG. 3.

Referring to FIGS. 8 to 10, in the clutch apparatus 10 according to this example embodiment, when the clutch release fork 21 pivots, the fork slip-off preventing clip 31 moves inside the long hole 25 and the long hole 26, so the pivoting movement of the clutch release fork 21 is able to be inhibited from being transmitted to the fork slip-off preventing clip 31. Therefore, the assembled state of the fork support boot 51 with respect to the release fork support 41 is able to be kept from changing, so a gap will not be created between the release fork support 41 and the fork support boot 51. As a result, the sealability of the space 12 by the fork support boot 51 is able to be sufficiently ensured.

Also, in this example embodiment, the lip portion 56 is urged against the clutch release fork 21 by the elastic force generated by the bellows portion 57. Therefore, even if the inclination of the clutch release fork 21 changes, the sealability between the fork support boot 51 and the clutch release fork 21 is able to be ensured by the lip portion 56.

Also, in this example embodiment, the tension force of the fitting portion 54 with respect to the constricted portion 43 is increased by the fork slip-off preventing clip 31. Therefore, the sealability between the fork support boot 51 and the release fork support 41 is able to be increased by the lip portion 59 formed on the fitting portion 54.

When providing the fork slip-off preventing clip 31, the clip through-groove 52 of the fork support boot 51 where the seal fixing portion 32 of the fork slip-off preventing clip 31 is arranged is provided not communicated with the space 12 to be filled with lubricant. Therefore, the lubricant in the space 12 is able to be prevented from leaking through the clip through-groove 52.

The fork slip-off preventing clip 31 sandwiches the release fork support 41 via the fork support boot 51. According to this kind of structure, the fork slip-off preventing clip 31 makes it possible to obtain both an effect of preventing the clutch release fork 21 from slipping off of the release fork support 41, and an effect of fixing the fork support boot 51 to the release fork support 41.

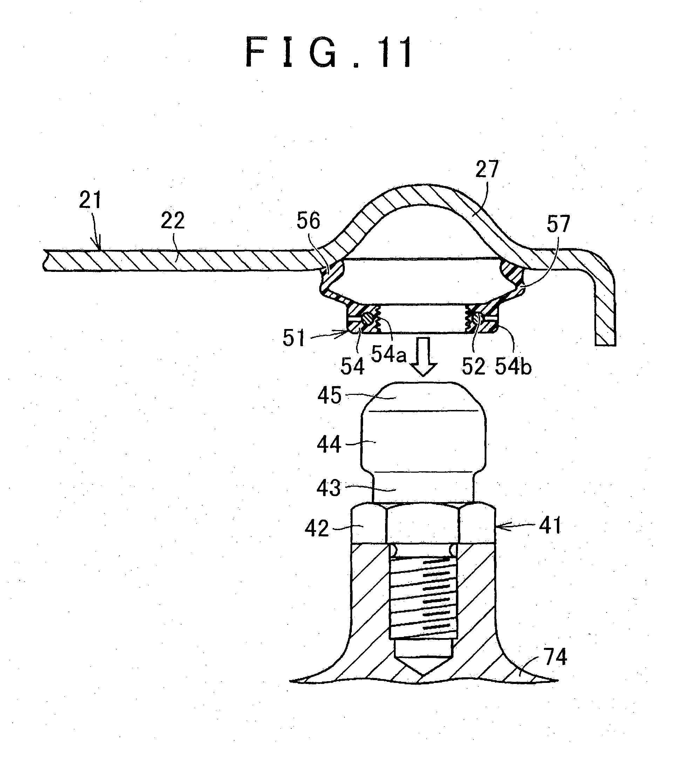

FIG. 11 is a sectional view of an assembly process of the clutch apparatus shown in FIG. 3. Referring to FIG. 11, in the assembly process of the clutch apparatus 10, first a subassembly formed by the clutch release fork 21, the fork slip-off preventing clip 31, and the fork support boot 51 is assembled. Then this subassembly is assembled to the release fork support 41 that is fastened to the clutch housing 74.

The fork support boot 51 and the fork slip-off preventing clip 31 are elastic bodies, so they easily extend at this time. The fitting portion 54 of the fork support boot 51 is fit over the constricted portion 43 while being pushed and expanded by the spherical sliding portion 45. This kind of assembly process makes it possible to both improve the assembly workability, and reduce damage to the fork support boot 51 when assembling the subassembly to the release fork support 41.

Summarizing the structure of the clutch apparatus 10 of the example embodiment of the invention described above, the clutch apparatus 10 according to this example embodiment includes the release fork support 41, the clutch release fork 21, the fork support boot 51 that serves as a seal member, and the fork slip-off preventing clip 31 that serves as a sandwiching member.

The release fork support 41 has the spherical sliding portion 45. The clutch release fork 21 has the support receiving portion 27 as a recessed portion that is in sliding contact with the sliding portion 45, and the folded-back portion 23 as a first side portion and the folded-back portion 24 as a second side portion that are provided one on each side of the support receiving portion 27 so as to sandwich the support receiving portion 27, and in which the long hole 25 and the long hole 26 are respectively formed. The clutch release fork 21 pivots in the clutch connecting / disconnecting direction, centered on the pivot central axis 106 with the sliding portion 45 as the fulcrum. The fork support boot 51 extends from the release fork support 41 toward the clutch release fork 21, and forms the space 12 to be filled with lubricant around the release fork support 41.

The fork slip-off preventing clip 31 is held to the clutch release fork 21 by being inserted into the long holes 25 and 26 formed in the folded-back portion 23 and the folded-back portion 24, and sandwiches the release fork support 41 via the fork support boot 51. The long holes 25 and 26 have curved shapes centered on the pivot central axis 106 of the clutch release fork 21, and are provided such that the fork slip-off preventing clip 31 is able to move inside the long holes 25 and 26 as the clutch release fork 21 pivots.

According to the clutch apparatus 10 of the example embodiment of the invention that is structured as described above, when the clutch release fork 21 pivots, the fork slip-off preventing clip 31 moves inside the long holes 25 and 26 that have curved shapes centered on the pivot central axis 106. As a result, sufficient sealability is able to be ensured with respect to the fulcrum that pivotally supports the clutch release fork 21. Thus, abnormal noise when the clutch is operated, and a deterioration of operability are able to be eliminated, so the quality of the vehicle is able to be improved.

The example embodiments disclosed herein are in all respects merely examples and should in no way be construed as limiting. The scope of the invention is indicated not by the foregoing description but by the scope of the claims for patent, and is intended to include all modifications that are within the scope and meanings equivalent to the scope of the claims for patent.

The invention is mainly applicable to a clutch apparatus provided in a manual transmission vehicle.

## Claims

1. A clutch apparatus including:
a release fork support (41) including a spherical sliding portion;
a clutch release fork (21) including a recessed portion, and a first side portion and a second side portion, the recessed portion being in sliding contact with the spherical sliding portion, the first side portion and the second side portion being provided one on each side of the recessed portion to sandwich the recessed portion, a long hole being provided in both the first side portion and the second side portion, the clutch release fork (21) pivoting in a clutch disconnecting direction or a clutch connecting direction, centered around a predetermined pivot central axis, with the spherical sliding portion as a fulcrum, and the long hole having a shape curved centered on the pivot central axis;
a seal member (51) extending from the release fork support (41) toward the clutch release fork (21), the seal member (51) defining a space to be filled with lubricant, around the release fork support (41); and
a sandwiching member (31) held to the clutch release fork (21) by being inserted into the long hole and sandwiching the release fork support (41) via the seal member (51), the long hole being provided to enable the sandwiching member (31) to move inside the long hole as the clutch release fork (21) pivots, the clutch apparatus **characterized in that**
the sandwiching member (31) moves between a first position and a second position in the long hole as the clutch release fork (21) pivots;
the long hole includes a first end portion and a second end portion, and extends curving between the first end portion and the second end portion; and
a center position between the first position and the second position is aligned with a center position between the first end portion and the second end portion.

2. The clutch apparatus according to claim 1, wherein
- a groove that extends along an outer periphery of the release fork support (41), and into which the sandwiching member (31) fits, is formed in the seal member (51).

3. The clutch apparatus according to claim 2, wherein
- the groove is provided not to be communicated with the space to be filled with lubricant.

4. The clutch apparatus according to any one of claims 1 to 3, wherein
- the seal member (51) includes a fitting portion that fits together with the release fork support (41);
a lip portion that contacts the release fork support (41) is provided on the fitting portion; and
the sandwiching member (31) is provided on the fitting portion to sandwich the release fork support (41) on an outer periphery of the lip portion.

5. The clutch apparatus according to any one of claims 1 to 4, wherein
the long hole includes a first long hole and a second long hole;
the first side portion is provided on one of two sides sandwiching the recessed portion;
the first long hole is provided in the first side portion;
the second side portion is provided on the other of the two sides sandwiching the recessed portion; and
the second long hole is provided in the second side portion.

## Patentansprüche

1. Kupplungsvorrichtung, die folgendes umfasst:
eine Ausrückgabelhalterung (41), die einen kugelförmigen Gleitabschnitt umfasst;
eine Kupplungsausrückgabel (21), die einen ausgesparten Abschnitt und einen ersten Seitenabschnitt und einen zweiten Seitenabschnitt umfasst, wobei der ausgesparte Abschnitt in gleitendem Kontakt mit dem kugelförmigen Gleitabschnitt ist, wobei der erste Seitenabschnitt und der zweite Seitenabschnitt, einer an jeder Seite des ausgesparten Abschnitts, vorgesehen ist, um den ausgesparten Abschnitt einzuklemmen, wobei ein Langloch sowohl in dem ersten Seitenabschnitt wie in dem zweiten Seitenabschnitt vorgesehen ist, wobei die Kupplungsausrückgabel (21) in einer Kupplungslöserichtung oder Kupplungsverbindungsrichtung um eine vorbestimmte Schwenkmittelachse zentriert, mit dem kugelförmigen Gleitabschnitt als ein Drehpunkt schwenkt, und wobei das Langloch eine um die Schwenkmittelachse zentrierte gekrümmte Form hat;
ein Dichtungsbauteil (51), dass sich von der Ausrückgabelhalterung (41) zu der Kupplungsausrückgabel (21) hin erstreckt, wobei das Dichtungsbauteil (51) einen um die Ausrückgabelhalterung (41) befindlichen und mit einem Schmiermittel zu füllenden Raum begrenzt; und
ein Ein-Klemmbauteil (31), das an der Kupplungsausrückgabel (21) gehalten ist, indem es in das Langloch eingeführt ist, und die Ausrückgabelhalterung (41) über das Dichtungsbauteil (51) einklemmt, wobei das Langloch vorgesehen ist, um dem Ein-Klemmbauteil (31) das Bewegen in dem Langloch zu ermöglichen, wenn die Kupplungsausrückgabel (21) schwenkt, wobei die Kupplungsvorrichtung **dadurch gekennzeichnet ist, dass**
sich das Ein-Klemmbauteil (31) zwischen einer ersten und einer zweiten Position in dem Langloch bewegt, wenn die Kupplungsausrückgabel (21) schwenkt;
das Langloch einen ersten Endabschnitt und einen zweiten Endabschnitt umfasst und sich krümmend zwischen dem ersten Endabschnitt und dem zweiten Endabschnitt erstreckt; und
eine Mittelposition zwischen der ersten Position und der zweiten Position mit einer Mittelposition zwischen dem ersten Endabschnitt und dem zweiten Endabschnitt ausgerichtet ist.

2. Kupplungsgerät nach Anspruch 1, wobei
eine Nut, die sich entlang eines Außenumfangs der Ausrückgabelhalterung (41) erstreckt und in welche das Ein-Klemmbauteil (31) eingepasst ist, in dem Dichtungsbauteil (51) ausgebildet ist.

3. Kupplungsgerät nach Anspruch 2, wobei
die Nut vorgesehen ist, ohne mit dem Raum in Verbindung zu sein, der mit Schmiermittel zu füllen ist.

4. Kupplungsgerät nach einem der Ansprüche 1 bis 3, wobei
das Dichtungsbauteil (51) einen Passabschnitt umfasst, der mit der Ausrückgabelhalterung (41) zusammen gepasst ist;
ein Lippenabschnitt, der die Ausrückgabelhalterung (41) berührt, auf dem Passabschnitt vorgesehen ist; und
das Ein-Klemmbauteil (31) auf dem Passabschnitt vorgesehen ist, um die Ausrückgabelhalterung (41) auf einem Außenumfang des Lippenabschnitts einzuklemmen.

5. Kupplungsgerät nach einem der Ansprüche 1 bis 4, wobei
das Langloch ein ersten Langloch und ein zweites Langloch umfasst;
der erste Seitenabschnitt auf einem der beiden Seiten vorgesehen ist, um den ausgesparten Abschnitt einzuklemmen;
das erste Langloch in dem ersten Seitenabschnitt vorgesehen ist;
der zweite Seitenabschnitt auf der anderen der beiden Seiten vorgesehen ist, um den ausgesparten Abschnitt einzuklemmen; und
das zweite Langloch in dem zweiten Seitenabschnitt vorgesehen ist.

## Revendications

1. Appareil d'embrayage comportant
un support (41) de fourchette de débrayage comportant une partie sphérique coulissante ;
une fourchette de débrayage (21) comportant une partie en évidement, et une première partie latérale et une deuxième partie latérale, la partie en évidement étant en contact coulissant avec la partie sphérique coulissante, la première partie latérale et la deuxième partie latérale étant chacune prévue sur chaque côté de la partie en évidement de manière à prendre en tenaille la partie en évidement, un trou allongé étant prévu à la fois dans la première partie latérale et la deuxième partie latérale, la fourchette de débrayage (21) pivotant dans une direction de désolidarisation d'embrayage ou dans une direction de raccordement d'embrayage, centrée autour d'un axe central de pivotement prédéterminé, avec la partie sphérique coulissante en tant que point de pivotement, et le trou allongé ayant une forme incurvée centrée sur l'axe central de pivotement ;
un élément d'étanchéité (51) s'étendant à partir du support (41) de fourchette de débrayage vers la fourchette de débrayage (21), l'élément d'étanchéité (51) définissant un espace destiné à être rempli d'un lubrifiant, autour du support (41) de fourchette de débrayage ; et
un élément de prise en tenaille (31) maintenu sur la fourchette de débrayage (21) en étant inséré dans le trou allongé et prenant en tenaille le support (41) de fourchette de débrayage par l'intermédiaire de l'élément d'étanchéité (51), le trou allongé étant prévu pour permettre à l'élément de prise en tenaille (31) de se déplacer à l'intérieur du trou allongé lorsque la fourchette de débrayage (21) pivote, l'appareil d'embrayage étant **caractérisé en ce que**
l'élément de prise en tenaille (31) se déplace entre une première position et une deuxième position dans le trou allongé lorsque la fourchette de débrayage (21) pivote ;
le trou allongé comporte une première partie d'extrémité et une deuxième partie d'extrémité, et s'étend en courbe entre la première partie d'extrémité et la deuxième partie d'extrémité ; et
une position centrale entre la première position et la deuxième position est alignée avec une position centrale entre la première partie d'extrémité et la deuxième partie d'extrémité.

2. Appareil d'embrayage selon la revendication 1, dans lequel
une rainure qui s'étend le long d'une périphérie extérieure du support (41) de fourchette de débrayage, et dans laquelle l'élément de prise en tenaille (31) s'ajuste, est formée dans l'élément d'étanchéité (51).

3. Appareil d'embrayage selon la revendication 2, dans lequel
la rainure est prévue de manière à ne pas être en communication avec l'espace destiné à être rempli de lubrifiant.

4. Appareil d'embrayage selon l'une quelconque des revendications 1 à 3, dans lequel
l'élément d'étanchéité (51) comporte une partie d'ajustement qui s'ajuste au support (41) de fourchette de débrayage ;
une partie en forme de lèvre qui est en contact avec le support (41) de fourchette de débrayage est prévue sur la partie d'ajustement; et
l'élément de prise en tenaille (31) est prévu sur la partie d'ajustement pour prendre en tenaille le support (41) de fourchette de débrayage sur une périphérie extérieure de la partie en forme de lèvre.

5. Appareil d'embrayage selon l'une quelconque des revendications de 1 à 4, dans lequel
le trou allongé comporte un premier trou allongé et un deuxième trou allongé ;
la première partie latérale est prévue sur l'un des deux côtés prenant en tenaille la partie en évidement ;
le premier trou allongé est prévu dans la première partie latérale ;
la deuxième partie latérale est prévue sur l'autre côté des deux côtés prenant en tenaille la partie en évidement ; et
le deuxième trou allongé est prévu dans la deuxième partie latérale.
